# EUROPÄISCHE PATENTSCHRIFT

(11) **EP 2 663 414 B1**
(45) Veröffentlichungstag und Bekanntmachung des Hinweises auf die Patenterteilung: **09.01.2019**
(21) Anmeldenummer: 12704654.8
(22) Anmeldetag: 10.01.2012
(51) Int. Cl.: B22F 5/04

(54) **VERFAHREN ZUM GENERATIVEN HERSTELLEN EINES BAUELEMENTES MIT EINER INTEGRIERTEN DÄMPFUNG FÜR EINE STRÖMUNGSMASCHINE UND GENERATIV HERGESTELLTES BAUELEMENT MIT EINER INTEGRIERTEN DÄMPFUNG FÜR EINE STRÖMUNGSMASCHINE**
METHOD FOR THE GENERATIVE PRODUCTION OF A COMPONENT WITH AN INTEGRATED DAMPING ELEMENT FOR A TURBOMACHINE, AND A COMPONENT PRODUCED IN A GENERATIVE MANNER WITH AN INTEGRATED DAMPING ELEMENT FOR A TURBOMACHINE
PROCÉDÉ DE FABRICATION GÉNÉRATIVE D'UN ÉLÉMENT À SYSTÈME D'AMORTISSEMENT INTÉGRÉ POUR TURBOMACHINE ET ÉLÉMENT À SYSTÈME D'AMORTISSEMENT INTÉGRÉ POUR TURBOMACHINE FABRIQUÉ DE FAÇON GÉNÉRATIVE

(30) Priorität: 15.01.2011 DE 102011008695
(43) Veröffentlichungstag der Anmeldung: 20.11.2013
(73) Patentinhaber: MTU Aero Engines AG, 80995 München (DE)
(72) Erfinder: NEUHÄUSLER, Stefan, 86672 Thierhaupten (DE); SATZGER, Wilhelm, 80804 München (DE); SIKORSKI, Siegfried, 80997 München (DE); DUSEL, Karl-Heinz, 85716 Unterschleissheim (DE); MELZER, Hans-Christian, 85305 Jetzendorf (DE); BAYER, Erwin, 85221 Dachau (DE)
(86) Internationale Anmeldenummer: PCT/DE2012/000012
(87) Internationale Veröffentlichungsnummer: WO 2012/095101

(56) Entgegenhaltungen:
- EP-A1- 1 593 757
- EP-A1- 1 864 748
- WO-A1-2008/046386
- WO-A1-2009/024258
- DE-A1-102006 049 216
- US-A1- 2009 104 065
- US-A1- 2009 258 168

## Beschreibung

Die vorliegende Erfindung betrifft ein Verfahren zum generativen Herstellen eines Bauelementes mit einer integrierten Dämpfung für eine Strömungsmaschine, insbesondere eine Gasturbine, ein Bauelement mit einer integrierten Dämpfung für eine Strömungsmaschine, insbesondere eine Gasturbine und eine Strömungsmaschine, insbesondere Gasturbine, mit einem derartigen Bauelement.

Obwohl auf beliebige Strömungsmaschine anwendbar, werden die vorliegende Erfindung und die ihr zugrunde liegende Problematik in Bezug auf eine Gasturbine näher erläutert.

Schwingungsbelastete und/oder thermisch belastete Turbinenbauelemente müssen sehr massiv ausgelegt werden, um ein vorzeitiges Versagen dieser Bauelemente aufgrund von Schwingbruch zu vermeiden. Um eine hinreichende Steifigkeit der Bauelemente zu erreichen, werden diese mit entsprechend großen Wanddicken ausgeführt. Dies führt zu einem hohen Bauteilgewicht. Dies gilt es verständlicherweise zu vermeiden.

Aus der US2009/0258168A1 ist ein Verfahren zum Aufbau einer Dämpfers mittels eines freiformenden Feststoffaufbaubauverfahrens bekannt.

Aus der WO 2008/046386 A1 ist ein Verfahren zum Herstellen eines Gasturbinenbauteils mit mindestens einer geschlossenen Außenwand und einer von der oder jeder Außenwand begrenzten, Hohlräume definierten Innenstruktur bekannt.

Aus der EP 1 864 748 A1 ist ein Verfahren zur Herstellung eines Zerspanwerkzeuges bekannt, welches mittels eines generativen Fertigungsverfahrens zu der fertigen Form des Werkzeughalters gebracht wird.

Aus der WO 2009/024258 A1 ist ein Verfahren zum Herstellen eines Bauteils unter Verwendung von Pulverwerkstoffen bekannt, wobei während des dreidimensionalen Aufbaus datenmäßig in einen Kern- und in einen Hüllebereich unterteilt wird und vom Kernbereich anschließend das Pulver entfernt wird und der leere Kernbereich mit einem weiteren Werkstoff aufgefüllt wird.

Aus der US 2009/0104065 A1 ist ein Verfahren zur generativen Herstellung eines Bauteils bekannt bei dem geschlossene Bereiche im Bauteil, die mit unverfestigstem Pulver befüllt sind, zugänglich sind.

Aus der EP 1 593 757 A1 sind integrierte keramische und metallische Bauteile bekannt, die für Gasturbinen geeignet sind.

DE 10 2006 049 216 A1 beschreibt ein Verfahren zur Herstellung eines Hochdruckturbinen-Rotors, wobei dieser Turbinenrotor als Blisk (d.h. Bladed Disk) gestaltet ist und eine radial innen angeordnete Scheibe sowie mehrere von dieser Scheibe abragende Schaufeln bzw. Schaufelblätter ausbildet, wobei der Turbinenrotor für eine Luftkühlung ein inneres Knallsystem aufweist und wobei zumindest ein Abschnitt dieses Turbinenrotors durch ein generatives Herstellungsverfahren erzeugt wird.

Die DE 10 2006 022 164 A1 beschreibt ein Verfahren zum Aussteifen eines Rotorelementes für eine fertigungstechnische Bearbeitung, wobei das Rotorelement wenigstens eine umlaufende von mindestens einer Seite zugängliche Aussparung mit einer radial außenliegenden Begrenzungswand aufweist. Die wenigstens eine Aussparung wird zumindest teilweise mit einer Stützstruktur aus Metallschaum gefüllt.

An diesen Anordnungen ist jeweils nachteilig, dass entweder kein Dämpfungsmaterial vorgesehen ist oder dass ein Dämpfungsmaterial erst in einem weiteren Verfahrensschritt nach der Herstellung des Bauelementes eingebracht wird. Hierdurch sind die hergestellten Bauelemente nur kostenintensiv und aufwändig herzustellen.

Hiervon ausgehend ist es Aufgabe der vorliegenden Erfindung, ein verbessertes Verfahren zur Herstellung eines Bauelementes mit einer integrierten Dämpfung zur Verfügung zu stellen. Diese Aufgabe wird erfindungsgemäß durch ein Verfahren mit den Merkmalen des Patentanspruchs 1 und/oder durch ein Bauelement mit den Merkmalen des Patentanspruchs 6 gelöst.

Demgemäß ist ein Verfahren zum generativen Herstellen eines Bauelementes mit einer integrierten Dämpfung für eine Strömungsmaschine, insbesondere eine Gasturbine, vorgesehen, mit folgenden Verfahrensschritten: generatives Aufbauen des Bauelementes, und Einbringen eines Dämpfungsmaterials in das Bauelement während des Verfahrensschrittes des generativen Aufbauens des Bauelementes, wobei als Dämpfungsmaterial ein unverfestigtes Grundmaterial des Bauelementes eingebracht wird, das Bauelement zumindest abschnittsweise mit einem Hohlraum aufgebaut wird und bei dem generativen Aufbau des Bauelementes in dem Hohlraum eine integrierte Stütz- und/oder Kühlstruktur aufgebaut wird, die eine Vielzahl an zwischen den Außenwänden des Bauelements verlaufenden Streben aufweist, wobei das Dämpfungsmaterial im Hohlraum der Streben eingebracht ist.

Ferner ist ein Bauelement mit einer integrierten Dämpfung für eine Strömungsmaschine, insbesondere eine Gasturbine, vorgesehen, wobei das Bauelement generativ aufgebaut ist, und wobei das Bauelement ein Dämpfungsmaterial aufweist, welches in das Bauelement während dem generativen Aufbau des Bauelementes eingebracht ist.

Die Grundidee der vorliegenden Erfindung besteht darin, das Dämpfungsmaterial gleichzeitig mit dem generativen Aufbau des Bauelementes in das Bauelement einzubringen. Hierdurch ist es beispielsweise möglich, das Dämpfungsmaterial in abgeschlossene Hohlräume des Bauelementes einzubringen und ein schneller Aufbau des Bauelementes ohne einen nachfolgenden Verfahrensschritt des nachträglichen Einbringens des Dämpfungsmaterials ist möglich.

Vorteilhafte Weiterbildungen ergeben sich aus den Unteransprüchen.

Gemäß einer bevorzugten Weiterbildung des Verfahrens wird als Dämpfungsmaterial ein unverfestigtes Grundmaterial des Bauelementes eingebracht. Hierdurch ist ein besonders schneller Aufbau des Bauelementes gewährleistet, wobei kein zweites Material als Dämpfungsmaterial eingebracht wird. Hierdurch reduziert sich vorteilhaft die Komplexität des Verfahrens.

Erfindungsgemäß wird das Bauelement zumindest abschnittsweise mit einem Hohlraum aufgebaut. Hierdurch wird das Bauelement vorteilhaft besonders leicht aufgebaut, wodurch sich der Anwendungsbereich des Verfahrens erweitert.

Erfindungsgemäß wird das Dämpfungsmaterial in den Hohlraum eingebracht. Hierdurch ist das Dämpfungsmaterial zuverlässig in dem Bauelement aufgenommen.

Erfindungsgemäß wird bei dem generativen Aufbau des Bauelementes in dem Hohlraum eine integrierte Stütz- und/oder Kühlstruktur aufgebaut. Hierdurch erhöht sich die Steifigkeit und Festigkeit des Bauelementes signifikant.

Erfindungsgemäß wird die Stützstruktur zumindest abschnittsweise mit einem Hohlraum aufgebaut, in welchen das Dämpfungsmaterial eingebracht wird. Hierdurch wird sowohl eine erhöhte Steifigkeit als auch ein verbessertes Dämpfungsverhalten des Bauelementes erreicht.

Gemäß einer weiter bevorzugten Weiterbildung des Verfahrens wird bei dem generativen Aufbau des Bauelementes in eine Außenwand des Bauelementes eine Kühlbohrung zum Verbinden des Hohlraumes mit einer Außenfläche des Bauelementes eingebracht. Hierdurch wird vorteilhaft das Herausführen von Kühlfluid aus dem Hohlraum zu der Außenfläche des Bauelementes ermöglicht.

Gemäß einer weiter bevorzugten Weiterbildung des Verfahrens wird bei dem generativen Aufbau des Bauelementes ein an einer Innenfläche des Hohlraumes angeordneter kühlfluidumlenkender Kühlbohrungseintritt der Kühlbohrung zum Umlenken von Kühlfluid aus dem Hohlraum in die Kühlbohrung ausgebildet. Dies ermöglicht ein gezieltes Abführen von Kühlfluid aus dem Hohlraum in die Kühlbohrung.

Gemäß einer weiter bevorzugten Weiterbildung des Verfahrens wird bei dem generativen Aufbau des Bauelementes ein an der Außenfläche des Bauelementes angeordneter Kühlbohrungsaustritt der Kühlbohrung tangential zu der Außenfläche ausgebildet. Hierdurch wird auf der Außenfläche vorteilhaft die Ausbildung eines Kühlfilms zur Kühlung des Bauelementes ermöglicht.

Die Erfindung wird im Folgenden anhand eines bevorzugten Ausführungsbeispiels unter Bezugnahme auf die beiliegenden Figuren der Zeichnung näher erläutert.

Von den Figuren zeigen
Fig. 1 eine Schnittansicht eines Bauelementes gemäß einem bevorzugten Ausführungsbeispiel der vorliegenden Erfindung;
Fig. 2 eine Schnittansicht einer Stützstruktur gemäß einer bevorzugten Ausführungsform der vorliegenden Erfindung;
Fig. 3 eine perspektivische Ansicht eines Bauelementes gemäß einem weiteren bevorzugten Ausführungsbeispiel der vorliegenden Erfindung;
Fig. 4 eine Schnittansicht des Bauelementes gemäß der Schnittlinie IV-IV nach Fig. 3;
Fig. 5 eine perspektivische Ansicht eines Bauelementes gemäß einem weiteren bevorzugten Ausführungsbeispiel der vorliegenden Erfindung;
Fig. 6 eine perspektivische Ansicht eines Bauelementes gemäß einem noch weiteren bevorzugten Ausführungsbeispiel der vorliegenden Erfindung; und
Fig. 7 eine Schnittansicht des Bauelementes gemäß der Schnittlinie VII-VII nach Fig. 6.

In den Figuren der Zeichnung sind gleiche und funktionsgleiche Elemente und Merkmale - sofern nichts anderes ausgeführt ist - mit denselben Bezugszeichen versehen.

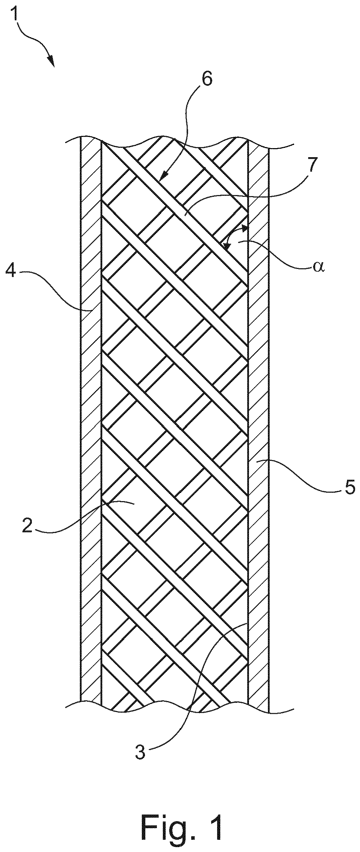

Die Fig. 1 illustriert ein bevorzugtes Ausführungsbeispiel eines Bauelementes 1 mit einer integrierten Dämpfung. Das Bauelement 1 ist beispielsweise als Komponente einer sogenannten Flowpath Hardware einer Strömungsmaschine, insbesondere einer Gasturbine, ausgebildet. Unter Flowpath Hardware werden beispielsweise Komponenten der Strömungsmaschine verstanden, welche in einem heißen Gasstrom der Strömungsmaschine angeordnet sind, wie beispielsweise Laufschaufeln, Leitschaufeln, ein Rotor, ein Stator, ein Deckband, Gehäuseabschnitte oder dergleichen. Das Bauelement 1 ist vorzugsweise in dem heißen Gasstrom der Strömungsmaschine angeordnet. Das Bauelement 1 kann alternativ als Komponente eines Verdichters einer Strömungsmaschine ausgebildet sein, in diesem Fall liegt keine Heißgasbelastung des Bauelementes 1 vor. Das Bauelement 1 wird vorzugsweise mittels einem generativen Verfahren aus einem Metallwerkstoff aufgebaut. Als generative Verfahren kommen beispielsweise das sogenannte Laser Engineered Net Shaping (LENS) und/oder ein Elektronenstrahlschmelzverfahren und/oder ein selektives Laserschmelzverfahren und/oder ein Laserformverfahren und/oder ein Laserauftragsschweißverfahren oder dergleichen zur Anwendung. Es kann auch ein beliebiges anderes generatives Verfahren zum Aufbauen des Bauelementes 1 aus einem metallischen Werkstoff eingesetzt werden. Beispielsweise wird das Bauelement 1 aus einem pulverförmigen Grundmaterial des Bauelementes 1 schichtförmig aufgebaut. Hierzu ist das Grundmaterial zunächst unverfestigt und wird zum generativen Aufbau des Bauelementes 1 beispielsweise mittels Wärmeeintrag zumindest teilweise aufgeschmolzen und so verfestigt. Die integrierte Dämpfung des Bauelementes 1 wird vorzugsweise durch das Einbringen eines Dämpfungsmaterials 2 in das Bauelement 1 während des generativen Aufbauens des Bauelementes 1 aus dem Grundmaterial erreicht. Das Dämpfungsmaterial 2 ist beispielsweise ein unverfestigtes Grundmaterial des Bauelementes 1. Hierzu wird insbesondere nach dem generativen Aufbau des Bauelementes 1 unverfestigtes, pulverförmiges Grundmaterial in dem Bauelement 1 belassen. Alternativ ist das Dämpfungsmaterial beispielsweise ein während des generativen Aufbaus des Bauelementes 1 in dieses eingebrachter Kleber oder Keramikschlicker, welcher beispielsweise in seinen Dämpfungseigenschaften durch Zugabe von Hohlkugeln, Keramikpartikeln, Glaskugeln und/oder dergleichen einstellbar ist. Alternativ kann das Dämpfungsmaterial 2 oder zusätzliches Dämpfungsmaterial 2 nach dem generativen Aufbau des Bauelementes 1 in dieses eingebracht werden.

Vorzugsweise wird das Bauelement 1 zumindest abschnittsweise mit einem Hohlraum 3 aufgebaut. Der Hohlraum 3 ist beispielsweise von Außenwänden 4, 5 des Bauelementes umschlossen. In den Hohlraum 3 wird vorzugsweise das Dämpfungsmaterial 2 eingebracht. Dies erfolgt bei dem generativen Aufbau des Bauelementes 1 beispielsweise dadurch, dass unverfestigtes Grundmaterial, beispielsweise pulverförmiges Grundmaterial, aus dem Hohlraum 3 nicht oder zumindest nicht vollständig entfernt wird, sondern in diesem belassen wird.

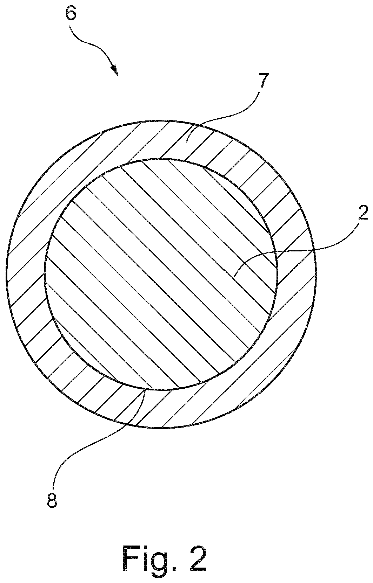

Vorzugsweise wird während dem generativen Aufbau des Bauelementes 1 in dem Hohlraum 3 eine integrierte, interne Stützstruktur 6 aufgebaut. Die Stützstruktur 6 kann als Dämpfungsstruktur 6 wirken. Die Stützstruktur 6 weist beispielsweise eine Vielzahl an zwischen den Außenwänden 4, 5 des Bauelementes 1 verlaufenden Streben 7 auf, von denen nur eine Strebe 7 mit einem Bezugszeichen versehen ist. Die Streben 7 können beispielsweise in dem Hohlraum 3 gleichmäßig verteilt sein oder je nach der Belastung des Bauelementes 1 in bestimmten Abschnitten des Bauelementes 1 in größerer oder kleinerer Anzahl angeordnet sein, variable Neigungswinkel α zu den Außenwänden 4, 5 und beispielsweise variable Querschnitte aufweisen. Die Streben 7 können sich kreuzen und/oder schneiden. Die Stützstruktur 6 kann zellenförmig, beispielsweise mit einer Wabenstruktur, einer Oktaederstruktur und/oder einer Tetraederstruktur oder dergleichen ausgebildet sein. Eine Tetraeder- oder Oktaederstruktur weist den Vorteil auf, dass keine Vorzugsrichtung besteht. Beispielsweise kann die Stützstruktur 6, insbesondere die Streben 7 oder die Zellstruktur, wie in Fig. 2 illustriert, zumindest abschnittsweise mit einem Hohlraum 8 aufgebaut sein, in welchen das Dämpfungsmaterial 2 eingebracht wird. Als Werkstoffe für das Bauelement 1 werden beispielsweise Titan, Nickel-Superlegierungen, Wolfram-Molybdänlegierungen oder dergleichen eingesetzt.

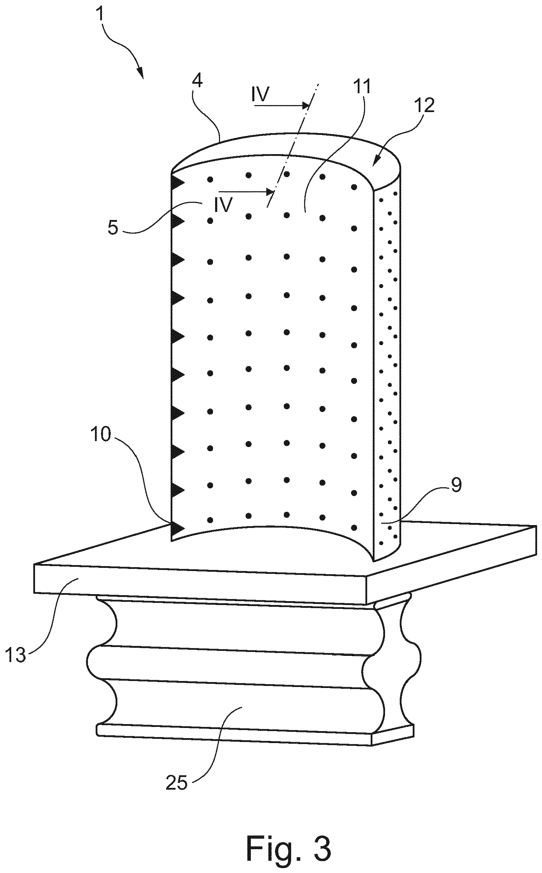

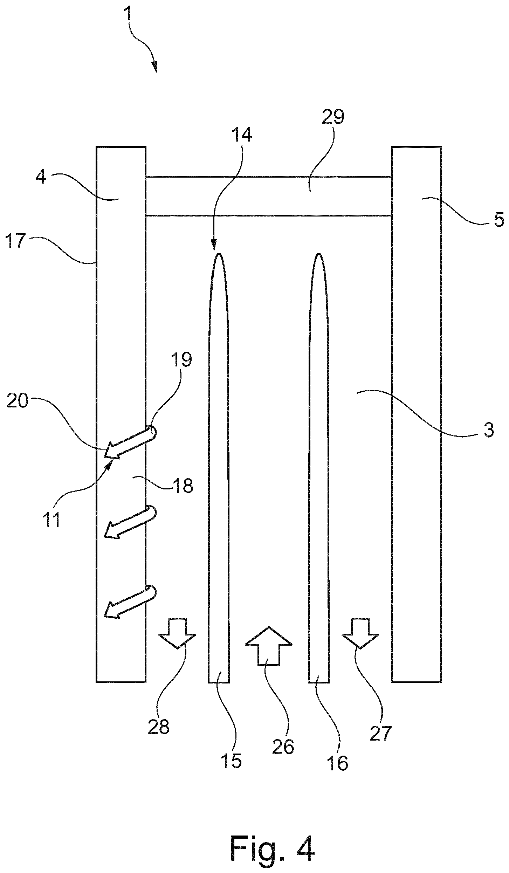

Die Fig. 3 und 4, auf die im Folgenden gleichzeitig Bezug genommen wird, illustrieren ein weiteres bevorzugtes Ausführungsbeispiel eines Bauelementes 1. Das Bauelement 1 ist beispielsweise als Turbinenschaufel 1, insbesondere als Hochdruckturbinenschaufel 1 oder als Niederdruckturbinenschaufel 1, einer Strömungsmaschine ausgebildet. Vorzugsweise ist die Turbinenschaufel 1 als Laufschaufel 1 ausgebildet. Die Laufschaufel 1 weist beispielsweise ein Schaufelblatt 12 mit einer Anströmkante 9 und einer Abströmkante 10 auf. In einer Aufsicht der Laufschaufel 1 verläuft ein Profil des Schaufelblattes 12 von der Anströmkante 9 über eine obere Außenwand 4 zu der Abströmkante 10. Von der Abströmkante 10 verläuft das Profil der Laufschaufel 1 über eine untere Außenwand 5 zurück zu der Anströmkante 9. Die obere Außenwand 4 ist vorzugsweise als Saugseite 4 und die untere Außenwand 5 ist vorzugsweise als Druckseite der Laufschaufel 1 ausgebildet. Die Außenwände 4, 5, die Anströmkante 9 und/oder die Abströmkante 10 weisen vorzugsweise eine Vielzahl an Kühlbohrungen, insbesondere Kühlluftbohrungen auf, von denen in Fig. 3 lediglich eine Kühlbohrung 11 mit einem Bezugszeichen versehen ist. Die Kühlbohrungen sind auf der Laufschaufel 1 vorzugsweise beliebig verteilt.

Die Laufschaufel 1 weist neben dem Schaufelblatt 12 einen Laufschaufelfuß 13 auf. Der Laufschaufelfuß 13 trägt das Schaufelblatt 12. Der Laufschaufelfuß 13 weist eine Plattenform auf, wobei auf einer Seite der Platte das Schaufelblatt 12 angeordnet ist und auf der anderen Seite der Platte eine Schwalbenschwanzverbindung 25 mit einem vorzugsweise tannenbaumförmigen Querschnitt vorgesehen ist. Der Schwalbenschwanz 25 dient zum kraft- und/oder formschlüssigen Verbinden der Laufschaufel 1 mit einer Rotornabe einer Strömungsmaschine. Die Laufschaufel 1 kann auch einstückig mit einer Rotornabe generativ aufgebaut sein.

Die Laufschaufel 1 ist vorzugsweise mit einem Hohlraum 3 gebildet. In dem Hohlraum 3 ist vorzugsweise eine Kühlstruktur 14 ausgebildet. Die Kühlstruktur 14 ist beispielsweise in Form von Wänden 15, 16 ausgebildet, welche ein Kühlfluid, insbesondere Kühlluft, in dem Hohlraum der Laufschaufel 1 führen. Die Wände 4, 5 verlaufen beispielsweise in dem Hohlraum 3 parallel zu den Außenwänden 4, 5 der Laufschaufel 1. Beispielsweise führt die Kühlstruktur 14 Kühlluft in Richtung der Pfeile 26-28 in einen besonders thermisch belasteten Bereich einer Schaufelspitze 29 und wieder von diesem weg. Die Kühlstruktur 14 kann als Kühl-/Stützstruktur 14 ausgebildet sein. In der Kühlstruktur 14 kann beispielsweise analog dem Ausführungsbeispiel des Bauelementes 1 gemäß der Fig. 1 und 2 Dämpfungsmaterial 2 zur Verwirklichung einer integrierten Dämpfung der Laufschaufel 1 vorgesehen sein.

Bei dem generativen Aufbau der Laufschaufel 1 werden beispielsweise in die Außenwände 4, 5 der Laufschaufel 1 die Kühlbohrungen eingebracht. Beispielsweise weist die Außenwand 4 die Kühlbohrung 11 auf. Die Kühlbohrung 11 verbindet den Hohlraum 3 mit einer Außenfläche 17 der Laufschaufel 1. Bei dem generativen Aufbau der Laufschaufel 1 wird vorzugsweise an einer Innenfläche 18 des Hohlraums 3 ein kühlfluidumlenkender Kühlbohrungseintritt 19 der Kühlbohrung 11 ausgebildet. Der kühlfluidumlenkende Kühlbohrungseintritt 19 ist vorzugsweise als muschelförmiger Kühlbohrungseintritt 19 ausgebildet und lenkt Kühlfluid aus dem Hohlraum 3 in die Kühlbohrung 11 um. Jede Kühlbohrung der Laufschaufel 1 kann einen individuell ausgebildeten Kühlbohrungseintritt 19 aufweisen. Die Kühlbohrung 11 kann in der Außenwand 4 einen gekrümmten, gewundenen oder abschnittsweise gekrümmten und/oder gewundenen Verlauf aufweisen. Bei dem generativen Aufbau der Laufschaufel 1 wird ein an der Außenfläche 17 angeordneter Kühlbohrungsaustritt 20 vorzugsweise derart ausgestaltet, dass dieser tangential zu der Außenfläche 17 angeordnet ist. Der Kühlbohrungsaustritt 20 hat vorzugsweise eine Trichterform, wobei die Trichterform zu der Außenfläche 17 des Bauelementes 1 hin geöffnet ist. Aufgrund der tangentialen Anordnung des Kühlbohrungsaustrittes 20 bildet sich an der Außenfläche 17 ein Kühlfilm aus, welcher die Laufschaufel 1 vor direktem Kontakt mit Heißgas schützt. Jede Kühlbohrung kann einen individuell ausgestalteten Kühlbohrungsaustritt 20 aufweisen. Vorzugsweise weist die Laufschaufel 1 analog zu dem Ausführungsbeispiel des Bauelementes 1 nach den Figuren 1 und 2 eine integrierte Stützstruktur 6 auf, welche beispielsweise Streben 7 oder Zellstrukturen wie Waben-, Oktaeder- und/oder Tetraederstrukturen aufweist. Als Dämpfungsmaterial 2 wird vorzugsweise unverfestigtes Grundmaterial des Bauelementes 1 zumindest teilweise in dem Hohlraum 3 der Laufschaufel 1 oder in dem Hohlraum 8 der Stützstruktur 6 belassen. Ferner kann das Bauelement 1 beispielsweise als Brennkammer 1 ausgebildet sein, wobei die Kühlbohrung 11 mit dem tangentialen Kühlbohrungsaustritt 20 zur Wandkühlung einer Innenwand der Brennkammer 1 einsetzbar ist.

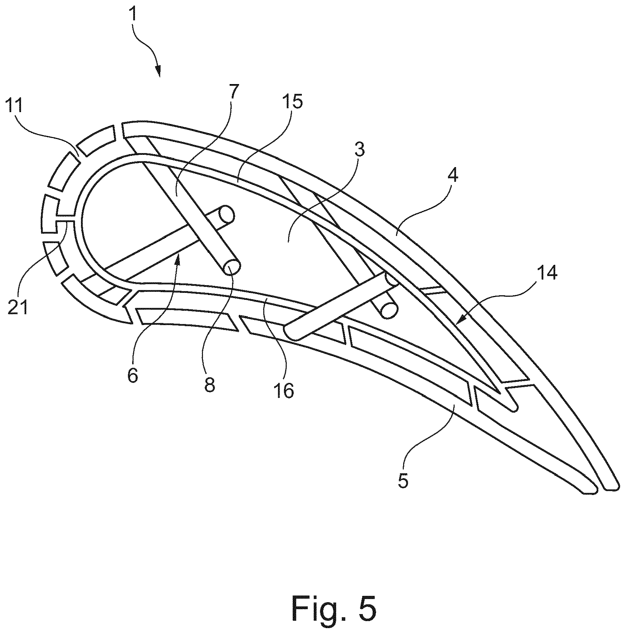

Das Bauelement 1 kann gemäß einem weiteren Ausführungsbeispiel nach Fig. 5 als Leitschaufel 1 ausgebildet sein. Eine Kühlstruktur 14 der Leitschaufel 1 weist vorzugsweise zusätzlich zu kühlluftführenden Wänden 15, 16 beispielsweise Stege auf, von denen nur ein Steg 21 mit einem Bezugszeichen versehen ist. Die Stege dienen zur Abstützung der Wände 15, 16 in dem Hohlraum 3 und zur Kühlluftführung. Die Kühlstruktur 14 ist somit vorzugsweise als doppelwandiger Kühlkanal ausgebildet, um die kühlste Luft bevorzugt an Bereiche der Leitschaufel 1 zu lenken, die von Heißgas am meisten beaufschlagt sind.

Weiterhin weist die Leitschaufel 1 vorzugsweise eine Stützstruktur 6 auf, welche beispielsweise in Form von Streben 7 analog zu dem Ausführungsbeispiel des Bauelementes 1 nach den Fig. 1 und 2 ausgebildet ist. Die Anordnung und die Anzahl der Streben 7 ist beliebig. Die Streben 7 können sich beispielsweise schneiden oder kreuzen. Vorzugsweise weist die Stützstruktur 6, insbesondere die Strebe 7, einen Hohlraum 8 auf, in welchem Dämpfungsmaterial 2 eingebracht ist. Das Dämpfungsmaterial 2 wird vorzugsweise bei dem generativen Aufbau der Laufschaufel 1 in den Hohlraum 8 und/oder in den Hohlraum 3 eingebracht. Als Dämpfungsmaterial 2 wird vorzugsweise unverfestigtes Grundmaterial des Bauelementes 1 in dem Hohlraum 3 des Bauelementes 1 und/oder in dem Hohlraum 8 der Stützstruktur 6 belassen. Die Stützstruktur 6 ist beispielsweise als Oktaederstruktur 6 oder als Tetraederstruktur 6 ohne eine Vorzugsrichtung aufgebaut. Beispielsweise sind die Seitenwände 4, 5 der Leitschaufel 1 als Gitterstrukturteile mit einer Deckhaut zur Gewichtsreduzierung hergestellt.

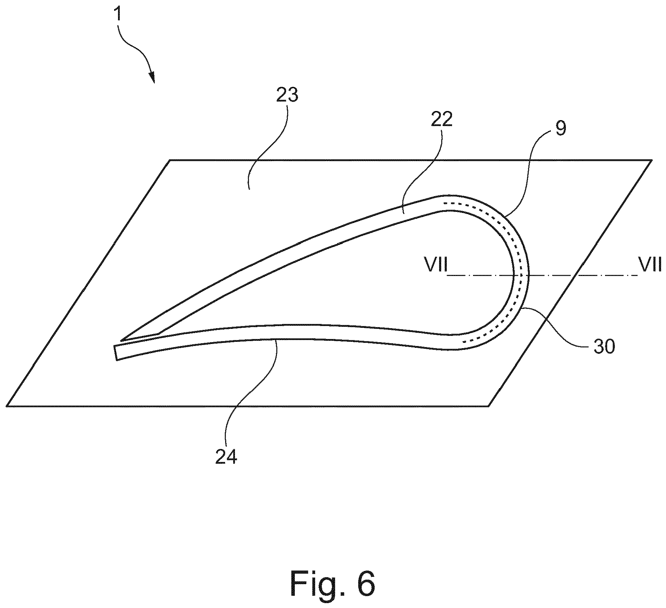

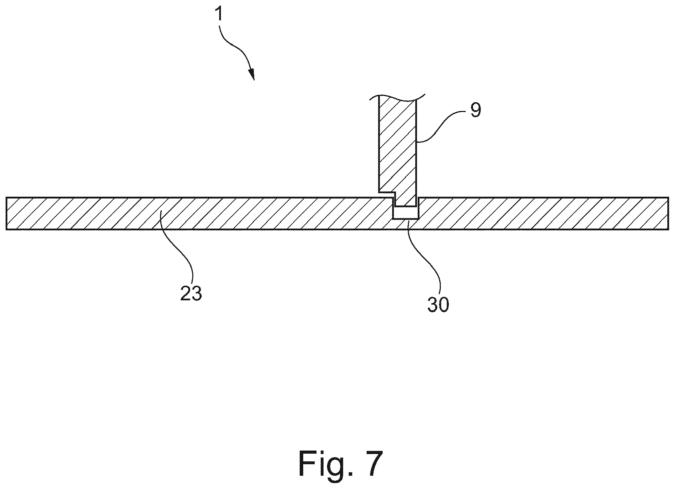

Die Fig. 6 und 7 illustrieren ein noch weiteres bevorzugtes Ausführungsbeispiel des Bauelementes 1. Das Bauelement 1 ist vorzugsweise als Leitschaufel 1 mit einem integrierten Deckband 23 ausgebildet. Das Deckband 23 weist vorzugsweise eine hohlzylinderförmige Form auf, wobei auf einer Außenfläche der hohlzylindrischen Form des Deckbandes 23 eine Vielzahl an Leitschaufeln 1 radial voneinander beabstandet angeordnet ist. Ein Umriss einer Leitschaufel 1 ist in Fig. 6 dargestellt. Die Leitschaufel 1 wird vorzugsweise gemäß der Ausführungsbeispiele des Bauelementes 1 nach den Fig. 1 bis 5 generativ aufgebaut, bevorzugt mit einer inneren Stützstruktur 6 und mit einer integrierten Dämpfung. Die Leitschaufel 1 und das Deckband 23 werden vorzugsweise gemeinsam generativ erzeugt und sind einstückig. Zwischen der Leitschaufel 1 und dem Deckband ist ein Stoß 24 ausgebildet. In einem mit einer gepunkteten Linie verdeutlichtem Bereich 22 des Stoßes 24 an einer Anströmkante 9 der Leitschaufel 1 ist diese nicht stoffschlüssig mit dem Deckband 23 verbunden. Der Stoß 24 ist in dem Abschnitt 22 als z-Stoß 30 ausgebildet. Der z-Stoß 30 entkoppelt die Leitschaufel 1 in dem Bereich 22 von dem Deckband 23. Im Bereich der Anströmkante 9 entstehen bei einer Leitschaufel 1 die höchsten mechanischen Spannungen aufgrund von thermomechanischen Belastungen. Es kann in diesem Bereich zu thermomechanischer Materialermüdung ("thermo mechanical fatigue", TMF) kommen. Aufgrund der Entkopplung der Anströmkante 9 von dem Deckband 23 mittels des z-Stoßes 30 kann sich die Leitschaufel 1 ausdehnen und wieder zusammenziehen, ohne dass das massive Deckband 23 diese Bewegung behindern würde. Hierdurch wird die Spannungsbelastung verringert und eine Rissbildung in der Anströmkante 9 der Leitschaufel 1 verhindert oder verzögert. Dadurch, dass die Leitschaufel 1 im Bereich des z-Stoßes 30 abschnittsweise in dem Deckband 23 versenkt ist, verursacht der z-Stoß 30 keine Störung des auf die Anströmkante 9 strömenden Heißgases.

Mittels des erfindungsgemäß erzeugten Bauelementes ist eine Erhöhung der Kühleffizienz bei generativ hergestellten Hochdruckturbinen- und Niederdruckturbinenschaufeln möglich. Weiterhin wird das Bauteilgewicht des Bauelementes bei gleicher oder verbesserter Strukturfestigkeit durch Verringerung von Toleranzen gegenüber einer Gussvariante reduziert. Der tangentiale Austritt der Kühlbohrungen verbessert die Kühlung bei hohlen Hochdruckturbinenschaufeln und Brennkammern. Der umlenkende Kühlbohrungseintritt ermöglicht eine bedarfsgerechte Steuerung des Luftdurchsatzes jeder einzelnen Kühlbohrung, indem der Kühlbohrungseintritt entsprechend geometrisch gestaltet wird. Die integrierte Dämpfung des Bauelementes reduziert die Schwingungsempfindlichkeit und erhöht damit die Lebensdauer des Bauelementes.

## Patentansprüche

1. Verfahren zum generativen Herstellen eines Bauelementes (1) mit einer integrierten Dämpfung für eine Strömungsmaschine mit folgenden Verfahrensschritten:
generatives Aufbauen des Bauelementes (1), und Einbringen eines Dämpfungsmaterials (2) in das Bauelement (1) während des Verfahrensschrittes des generativen Aufbauens des Bauelementes (1),
**dadurch gekennzeichnet,**
**dass** als Dämpfungsmaterial (2) ein unverfestigtes Grundmaterial des Bauelementes (1) eingebracht wird, das Bauelement (1) zumindest abschnittsweise mit einem Hohlraum (3) aufgebaut wird und bei dem generativen Aufbau des Bauelementes (1) in dem Hohlraum (3) eine integrierte Stütz- und/oder Kühlstruktur (6, 14) aufgebaut wird, die eine Vielzahl an zwischen den Außenwänden (4, 5) des Bauelements verlaufenden Streben (7) aufweist, wobei das Dämpfungsmaterial (2) im Hohlraum (8) der Streben (7) eingebracht ist.

2. Verfahren nach Anspruch 1,
**dadurch gekennzeichnet,**
**dass** bei dem generativen Aufbau des Bauelementes (1) in eine Außenwand (4, 5) des Bauelementes (1) eine Kühlbohrung (11) zum Verbinden des Hohlraumes (3) mit einer Außenfläche (17) des Bauelementes (1) eingebracht wird.

3. Verfahren nach Anspruch 2,
**dadurch gekennzeichnet,**
**dass** bei dem generativen Aufbau des Bauelementes (1) ein an einer Innenfläche (18) des Hohlraumes (3) angeordneter kühlfluidumlenkender Kühlbohrungseintritt (19) der Kühlbohrung (11) zum Umlenken von Kühlfluid aus dem Hohlraum (3) in die Kühlbohrung (11) ausgebildet wird.

4. Verfahren nach Anspruch 2 oder 3,
**dadurch gekennzeichnet,**
**dass** bei dem generativen Aufbau des Bauelementes (1) ein an der Außenfläche (17) des Bauelementes (1) angeordneter Kühlbohrungsaustritt (20) der Kühlbohrung (11) tangential zu der Außenfläche (17) ausgebildet wird.

5. Verfahren nach einem der vorherigen Ansprüche,
**dadurch gekennzeichnet,**
**dass** die Strömungsmaschine für welche die integrierte Dämpfung hergestellt wird eine Gasturbine ist.

6. Bauelement (1) mit einer integrierten Dämpfung für eine Strömungsmaschine,
**dadurch gekennzeichnet,**
**dass** das Bauelement (1) generativ aufgebaut ist und
- das Bauelement (1) zumindest abschnittsweise mit einem Hohlraum (3) aufgebaut ist,
- in dem Hohlraum (3) eine integrierte Stütz- und/oder Kühlstruktur (6, 14) vorhanden ist, die eine Vielzahl an zwischen den Außenwänden (4, 5) des Bauelements verlaufenden Streben (7) aufweist,
- ein Dämpfungsmaterial (2) enthalten ist, welches als ein unverfestigtes Grundmaterial des Bauelementes (1) eingebracht ist,
- wobei das Dämpfungsmaterial (2) im Hohlraum (3) der Streben (7) eingebracht ist.

7. Bauelement nach Anspruch 6,
**dadurch gekennzeichnet,**
**dass** die Strömungsmaschine eine Gasturbine ist.

8. Strömungsmaschine=mit einem Bauelement (1) nach Anspruch 6 oder 7.

## Claims

1. Method for the additive manufacturing of a component (1) having integrated damping for a turbomachine, comprising the following method steps:
additively building up the component (1), and introducing a damping material (2) into the component (1) during the method step of additively building up the component (1),
**characterised in that** an unsolidified basic material of the component (1) is introduced as the damping material (2), the component (1) is built up so as to have a cavity (3) at least in portions and, when the component (1) is being additively built up, an integrated supporting and/or
cooling structure (6, 14) is built up in the cavity (3), which structure comprises a plurality of struts (7) which extend between the exterior walls (4, 5) of the component, the damping material (2) being introduced in the cavity (8) in the struts (7).

2. Method according to claim 1, **characterised in that**, when the component (1) is being additively built up, a cooling bore (11) is made in an exterior wall (4, 5) of the component (1) in order to connect the cavity (3) to an outer surface (17) of the component (1).

3. Method according to claim 2, **characterised in that**, when the component (1) is being additively built up, a coolant-deflecting cooling bore entrance (19) of the cooling bore (11) that is arranged on an inner surface (18) of the cavity (3) is formed in order to deflect coolant out of the cavity (3) and into the cooling bore (11).

4. Method according to either claim 2 or claim 3, **characterised in that**, when the component (1) is being additively built up, a cooling bore exit (20) of the cooling bore (11) that is arranged on the outer surface (17) of the component (1) is formed tangentially to the outer surface (17).

5. Method according to any of the preceding claims, **characterised in that** the turbomachine for which the integrated damping is produced is a gas turbine.

6. Component (1) having integrated damping for a turbomachine, **characterised in that** the component (1) is additively built up and
- the component (1) is built up so as to have a cavity (3) at least in portions,
- an integrated supporting and/or cooling structure (6, 14) is provided in the cavity (3), which structure comprises a plurality of struts (7) which extend between the exterior walls (4, 5) of the component,
- a damping material (2) is contained which is introduced as an unsolidified basic material of the component (1),
- the damping material (2) being introduced in the cavity (3) of the struts (7).

7. Component according to claim 6, **characterised in that** the turbomachine is a gas turbine.

8. Turbomachine comprising a component (1) according to either claim 6 or claim 7.

## Revendications

1. Procédé pour la fabrication générative d'un composant (1) comprenant un amortissement intégré pour une turbomachine, comprenant les étapes suivantes :
la construction générative du composant (1) et l'introduction d'un matériau amortisseur (2) dans le composant (1) pendant l'étape de procédé de la construction générative du composant (1),
**caractérisé en ce**
**qu'**un matériau de base non consolidé du composant (1) est introduit en tant que matériau amortisseur (2), que le composant (1) est réalisé au moins par sections avec un espace creux (3) et que lors de la construction générative du composant (1) une structure de support et/ou de refroidissement (6, 14) est construite dans l'espace creux (3), lequel comprend une pluralité d'entretoises (7) s'étendant entre les parois extérieures (4, 5) du composant, le matériau amortisseur (2) étant introduit dans l'espace creux (8) des entretoises (7).

2. Procédé selon la revendication 1, **caractérisé en ce que**
lors de la construction générative du composant (1) un perçage de refroidissement (11) est introduit dans une paroi extérieure (4, 5) du composant (1), pour la connexion de l'espace creux (3) à une surface extérieure (17) du composant (1).

3. Procédé selon la revendication 2, **caractérisé en ce que**
lors de la construction générative du composant (1) un accès (19) du perçage de refroidissement (11) déviant le fluide de refroidissement, disposé sur une paroi interne (18) de l'espace creux (3), est réalisé pour la déviation du fluide de refroidissement de l'espace creux (3) dans le perçage de refroidissement (11).

4. Procédé selon la revendication 2 ou 3, **caractérisé en ce que**
lors de la construction générative du composant (1) une sortie (20) du perçage de refroidissement (11) disposé sur la surface externe (17) du composant (1) est réalisé tangentiellement à la surface externe (17).

5. Procédé selon l'une quelconque des revendications précédentes, **caractérisé en ce que** la turbomachine pour laquelle l'amortissement intégré est fabriqué est une turbine à gaz.

6. Composant (1) comportant un amortissement intégré pour une turbomachine,
**caractérisé en ce**
**que** le composant (1) est construit de façon générative et
**que** le composant (1) est construit au moins par sections avec un espace creux (3), qu'une structure de support et/ou de refroidissement (6, 14) intégrée est présente dans l'espace creux (3), laquelle comprend une pluralité d'entretoises (7) s'étendant entre les parois externes (4, 5) du composant,
**qu'**un matériau amortisseur (2) est présent, lequel est inséré en tant que matériau de base non consolidé du composant (1),
le matériau amortisseur (2) étant inséré dans l'espace creux (3) des entretoises (7).

7. Composant selon la revendication 6, **caractérisé en ce que**
la turbomachine est une turbine à gaz.

8. Turbomachine comprenant un composant (1) selon la revendication 6 ou 7.
